# EUROPEAN PATENT APPLICATION

(11) **EP 1 755 288 A1**
(43) Date of publication of application: **21.02.2007**
(21) Application number: 05748943.7
(22) Date of filing: 09.06.2005
(51) Int. Cl.: H04L 12/56, H04L 12/46, H04Q 7/22, H04Q 7/36

(54) **COMMUNICATION HANDOVER METHOD AND COMMUNICATION MESSAGE PROCESSING METHOD**

(30) Priority: 11.06.2004 JP 2004174728
(71) Applicant: MATSUSHITA ELECTRIC INDUSTRIAL CO., LTD., Osaka 571-8501 (JP)
(72) Inventor: KASAPIDIS, Makis Matsushita Electric Industrial, Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/010558
(87) International publication number: WO 2005/122504

(57) **Abstract**

The present invention discloses a technique, by which it is possible to quickly decide a PMTU relating to a new data path after a handover even when a mobile node has performed the handover. According to this technique, a mobile node (MN) 10 for performing handover notifies an IP address of a correspondent node (CN) 40 performing communication before the handover to an access router newly connected (nAR) 30 after the handover. When nAR discovers and decides an optimal PMTU relating to a path to CN, and notifies the decided PMTU to MN when MN is connected under the control of nAR. As a result, MN sets up a PMTU relating to the data path to CN immediately after the handover and can transmit packet in optimal packet size. In particular, it is possible to notify the IP address of CN, with which MN has been communicating before the handover, to nAR by using the processing relating to FMIP.

## Description

### TECHNICAL FIELD

The present invention relates to a communication handover method and a communication message processing method relating to a handover by a mobile node for performing radio communication. In particular, the invention relates to a communication handover method and a communication message processing method relating to a mobile node for performing radio communication using mobile IPv6 (Mobile Internet Protocol version 6), which is the next generation Internet protocol.

### BACKGROUND ART

In a communication network such as Internet (IP network), it is now proposed to shift from IPv4, which is currently the main stream, to IPv6, which can cope with the problems relating to the exhaustion of addresses. In recent years, there have been attempts on development and expansion of IPv6 and also of various types of protocols based on IPv6.

In the communication system using IPv4 or IPv6, packet communication is adopted to transmit the data in units of packets. The communication system of this type comprises a plurality of intermediate nodes (e.g. routers), and a maximum transmission unit (MTU) of packet is decided for each link between the intermediate nodes. The MTU as determined for the links between the intermediate nodes is referred here as a link MTU.

Let us consider a case where a packet is transmitted from a source node to a destination node via a communication network such as Internet. In this case, the packet transmitted from the source node passes through links between a multiple of intermediate nodes, i.e. component elements of the communication network, until it reaches the destination node. For instance, in IPv6, when a source node transmits a packet to a destination node, the source node must transmit the packet in size (length) smaller than each link MTU to the link MTU of all links, which make up a data path up to the destination node. Specifically, in IPv6, when the source node has transmitted a packet in a packet size larger than any of the link MTU in the links, which make up the data path up to the destination node, the packet may be dropped in the link.

On the other hand, it can also be so arranged that the source node transmits the packet of smaller size so that the packet will be transferred to all of the links. In this case, problems may arise such as: the decrease of throughput caused by the increase of overhead (relative increase of the size of header unit due to the reduction of payload unit), or the increase of the possibility to lose the packet on communication network due to the increase in the number of packets, or the increase of processing load caused by the increase in the number of packets. As a result, it is not possible to achieve the communication with high efficiency. Therefore, for the purpose of optimizing the communication efficiency, it is desirable to set up an MTU, in which the packet of larger size can be transmitted without exceeding the link MTU relating to each of the links, which make up the data path to the destination node.

In case of IPv4, for instance, packet fragmentation is allowed by the intermediate node such as a path for the transfer of packets. In IPv6, in the link as described above where the packet is dropped, packets are divided to the packets of smaller size so that the packet can reach the node at the destination. However, this may result in higher possibility to cause the increase of the load or the delay due to the fragmentation of packet or to lose the fragmented packets. Therefore, in IPv4, too, it is desirable that the source node sets up an MTU capable to transmit the packets of larger size so that the link MTU relating to the links to make up the data path to the destination node may not be exceeded.

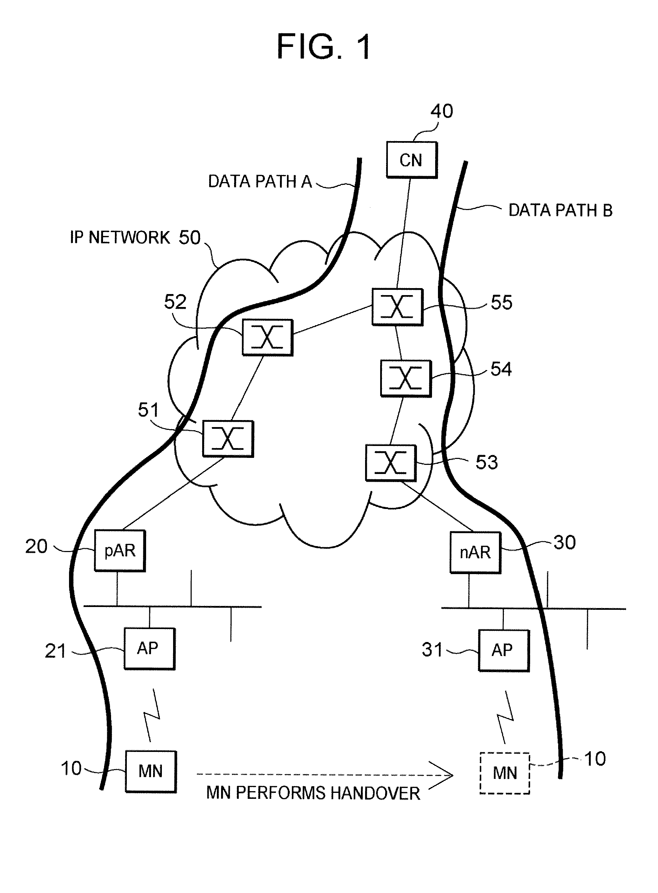

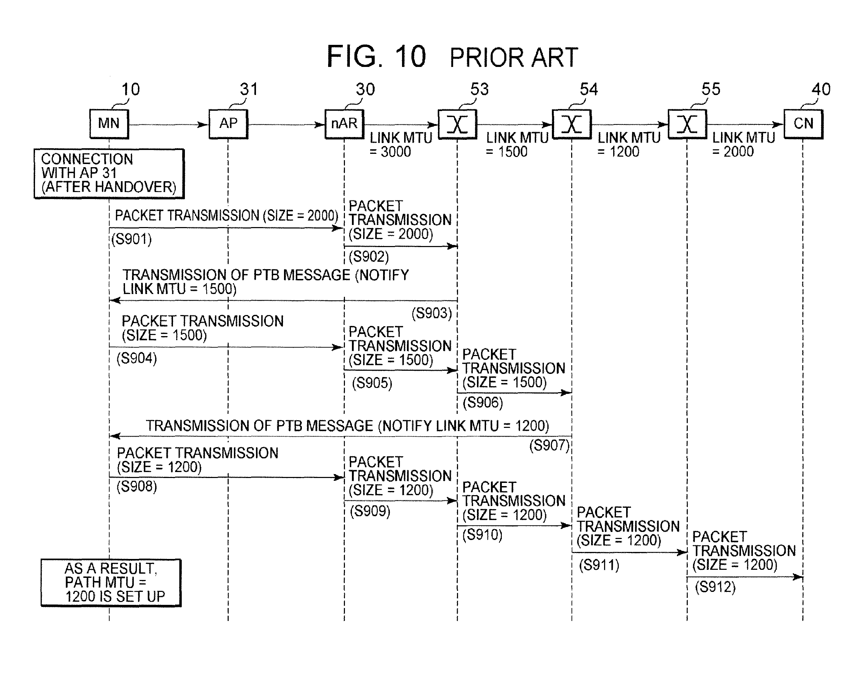

Now, referring to Fig. 1 and Fig. 10, description will be given on operation relating to the determination of MTU when a source node performs handover in the case where the conventional technique is used. Fig. 10 is a sequence chart to show an example of a method for deciding PMTU when a source node performs handover using the conventional technique. On the network arrangement shown in Fig. 1, detailed description will be given later. The operation according to the conventional technique is based on a method described in the Non-Patent Document 1 as given below.

When a source node (here, MN (mobile node) 10) performs handover from AP (Access Point) 21 under control of pAR (previous Access Router) 20 to AP 31 under control of nAR (new Access Router) 30, a data path between MN 10 and the source node (here, CN (Correspondent Node) 40) is changed to a data path B from a data path A. In this case, MN 10 performs processing to decide MTU of the packet transmitted to CN 40 under the condition that it is connected to AP 31 after the handover. Specifically, by MN 10, an optimal path MTU (PMTU (Path Maximum Transmission Unit)) is discovered on the data path B (MN 10 - AP 31 - nAR 30 - an intermediate node 53 - an intermediate node 54 - an intermediate node 55 - CN 40) by MN 10.

In this case, on each link along the data path, which will be a transmission path of the packets from MN 10 to CN 40 after the handover, it is supposed here that a link MTU between nAR 30 and the intermediate node 53 is 3000, a link MTU between the intermediate node 53 and the intermediate node 54 is 1500, a link MTU between the intermediate node 54 and the intermediate node 55 is 1200, and a link MTU between the intermediate node 55 and CN 40 is 2000. The data path B is determined as the result of the transmission of packets from MN 10 to CN 40 after the handover.

When MN 10 has been communicating with CN 40 by connection with AP 21 under control of pAR 20, and MN 10 carries out switchover of connection (handover) to AP 31 under control of nAR, the communication between MN 10 and CN 40 is continued via AP 31 (i.e. a new connection destination) and nAR 30. MN 10 after the handover starts the packet transmission on the data path B by the MTU used on the data path A between MN 10 and CN 40 before the handover (here, PMTU of the data path A is 2000). For instance, from MN 10 immediately after the handover, a packet relating to a binding update message is transmitted.

The packet transmitted from MN 10 (packet transmitted with packet size of 2000), reaches nAR 30 via AP 31 (Step S901) and is further transferred to the intermediate node 53 from nAR 30 (Step S902). However, the link MTU between the intermediate node 53 and the intermediate node 54 relating to the next hop (transfer from the intermediate node 53 to the intermediate node 54) is 1500. As a result, the packet in packet size of 2000 is dropped without being transferred. Instead of this, a Packet Too Big message (hereinafter referred as "PTB message") defined by ICMPv6 (Internet Control Message Protocol version 6) is sent to MN 10 (Step S903). This PTB message notifies that the packet was not transferred due to incompatibility with the link MTU, and it is a message to notify the link MTU in the next hop (here, the link MTU = 1500 between the intermediate node 53 and the intermediate node 54).

Upon receipt of the PTB message from the intermediate node 53, MN 10 newly sets up MTU = 1500 and transmits the packet in packet size = 1500 to CN 40. This packet (packet size = 1500) reaches nAR 30 via AP 31 (Step S904) and is further transmitted to the intermediate node 53 from nAR 30 (Step S905). Then, it is transferred from the intermediate node 53 to the intermediate node 54 (Step S906). However, the link MTU between the intermediate node 54 and the intermediate node 55 relating to the next hop (transfer from the intermediate node 54 to the intermediate node 55) is 1200. As a result, the packet in packet size = 1500 is not transferred but it is dropped. Similarly to Step S903, a PTB message to notify that the link MTU = 1200) is sent back to MN 10 from the intermediate node 54 (Step S907).

Upon receipt of the PTB message from the intermediate node 54, MN 10 newly sets up MTU = 1200 again and transmits the packet in packet size = 1200 to CN 40. This packet (packet size = 1200) reaches nAR 30 via AP 31 (Step S908), and it is further transferred from nAR 30 to the intermediate node 53, from the intermediate node 53 to the intermediate node 54, from the intermediate node 54 to the intermediate node 55, and from the intermediate node 55 to CN 40 (Steps S909 - S912). As a result, the PMTU relating to the data path B is set to 1200 at MN 10, and the packet to be transmitted from MN 10 to CN 40 is divided to the packet size 1200.

In addition to the method for deciding MTU as described above, various methods for deciding PMTU are known. For example, the Patent Document 1 as given below discloses a new technique. According to this technique, on the data path between a source node and a destination node, a link MTU between the nodes on the data path collected by the source node is notified to the destination node from the source node. As a result, discovering of PMTU at the destination node can be carried out with high efficiency, and this makes it possible to quickly cope with the change of PMTU.

Also, according to the Patent Document 2 as given below, a new technique is disclosed, according to which an ICMP echo request message is repeatedly transmitted by gradually reducing the size from a local system to a target system, and the packet size when an ICMP echo response message is received from the target system is regarded as the PMTU on the data path from the local system to the target system.

Further, according to the new technique disclosed in the Patent Document 3 as given below, the intermediate node on the data path sends back the above PTB message to the source node, and a packet for discovering a new PMTU suitable for the link MTU is transmitted to the destination node. As a result, the source node can identify the PMTU to the destination node by performing the packet transmission only once.
[Patent Document 1] US Patent Application Publication 2004-0008664
[Patent Document 2] U.S. Patent No. 5959974
[Patent Document 3] US Patent Application Publication 2003-0185208
[Non-Patent Document 1] McCann, J., Deering, S., and Mogul, J.: "Path MTU Discovery for IP version 6"; IETF RFC 1981; August 1996.
[Non-Patent Document 2] Rajeev Koodli: "Fast Handover for Mobile IPv6"; draft-ietf-mobileip-fast-mipv6-08; October 2003.

However, as shown in Fig. 10, when the source node performs handover, this means that a PMTU relating to the data path to CN 40 is newly discovered after the handover. When the discovering of PMTU is started after the handover, the source node cannot transmit the packet to CN until the optimal PMTU is decided from immediately after the handover (from immediately after the handover to the determination of the optimal PMTU). Thus, delay or interruption of communication may occur.

MN may start packet transmission after the handover by using the PMTU relating to the data path A, which has been used before the handover. However, the PMTU relating to the data path B used after the handover is not necessarily the same as the PMTU relating to the data path A. In case the PMTU relating to the data path B is smaller than the PMTU relating to the data path A, the PMTU must be discovered after the handover.

### DISCLOSURE OF THE INVENTION

To solve the above problems, it is an object of the present invention to provide a communication handover method and a communication message processing method, by which it is possible to quickly decide a PMTU relating to a new data path after handover when a mobile node performs handover.

To attain the above object, the present invention provides a communication handover method in a communication system where a first access router having a first access point under control and a second access router having a second access point under control are connected via a communication network, and a mobile node performs handover from said first access point to said second access point, wherein said method comprises:
a handover deciding step where said mobile node connected to said first access point decides to carry out said handover from said first access point to said second access point and acquires an identification information of said second access point from said second access point;
a first address notifying step where said mobile node notifies the identification information of said second access point to said first access router via said first access point, and said mobile node notifies an address of a correspondent node, with which the mobile node has been communicating via said first access point before the handover;
a second address notifying step where said first access router identifies said second access router according to the identification information of said second access point notified from said mobile node and notifies the address of said correspondent node to said second access router;
a PMTU deciding step where said second access router decides a PMTU relating to a data path to said correspondent node according to the address of said correspondent node;
a PMTU notifying step where said second access router notifies said PMTU via said second access point to said mobile node connected to said second access point by said handover; and
a packet size setting step where said mobile node sets up packet size of a packet to be transmitted to said correspondent node according to said PMTU notified from said second access router.
With the arrangement as described above, it is possible to quickly decide a PMTU relating a new data path after handover when a mobile node performs handover.

Further, the present invention provides the communication handover method as described above, wherein the PMTU relating to the data path between said mobile node before the handover by the mobile node and said correspondent node is notified together with the address of said correspondent node in said first and said second address notifying steps, and the PMTU relating to the data path to said correspondent node is decided according to the address of said correspondent node and according to the PMTU relating to the data path between said mobile node before said handover by said mobile node and said correspondent node in said PMTU deciding step.
With the arrangement as describe above, the mobile node can perform discovering of the PMTU relating to an access router connected after the handover (a second access router) with high efficiency, and it is possible to reduce the processing load or to shorten the time required for PMTU, and also to improve the efficiency in the notification of the new PMTU to the mobile node.

Also, the present invention provides the communication handover method as described above, wherein, in said first address notifying step, address of said correspondent node is embedded in RtSolPr message of FMIP or FBU message and is transmitted from said mobile node to said first access router, or said address of said correspondent node and the PMTU relating to the data path between said mobile node before the handover by said mobile node and said correspondent node are embedded in the RtSolPr message of FMIP or in the FBU message and are transmitted.
With the arrangement as describe above, each message of FMIP can be given to an access router connected before the handover (a first access router) from the mobile node, and it is possible to transmit an address of a correspondent node (CN) or an information of PMTU, which the mobile node has been using before the handover, with high efficiency.

Further, the present invention provides the communication handover method as described above, wherein, in said second address notifying step, an address of said correspondent node is embedded in HI message of FMIP and transmitted from said first access router to said second access router, or the address of said correspondent node and the PMTU relating to the data path between said mobile node before the handover by said mobile node and said correspondent node are embedded in the HI message of FMIP and are transmitted.
With the arrangement as described above, each message of FMIP is transmitted from an access router connected before the handover (a first access router) to an access router connected after the handover (a second access router), and the address of the correspondent node (CN) or the information of the PMTU, which has been used by the mobile node before the handover), can be quickly transmitted with high efficiency.

Also, the present invention provides the communication handover method as described above, wherein, in said PMTU notifying step, said PMTU is embedded in RA message and is transmitted to said mobile node from said second access router.
With the arrangement as described above, it is possible to transmit by embedding the PMTU relating to the data path to the correspondent node (CN) in RA message, which had included the MTU of local link in the past.

Further, the present invention provides a communication handover method in a communication system where a first access router with a first access point under control and a second access router having a second access point under control are connected via a communication network, and a mobile node performs handover from said first access point to said second access point, wherein said method comprises: and
a handover deciding step where it is decided that said handover is performed from said first access point to said second access point under the condition being connected to said first access point, and that an identification information of said second access point is acquired from said second access point;
an address notifying step where the identification information of said second access point and an address of a correspondent node, with which said mobile node has been communicating via said first access point before the handover are notified to said first access router via said first access point;
a PMTU receiving step where a PMTU relating to a data path to said correspondent node decided by said second access router according to the address of said correspondent node acquired from said first access router is received from said second access router via said second access point; and
a packet size setting step where packet size of a packet to be transmitted to said correspondent node is set up according to said PMTU received from said second access router;
With the arrangement as described above, it is possible to quickly decide the PMTU relating to the new data path after the handover even when the mobile node has performed the handover.

Also, the present invention provides the communication handover method as described above, wherein, in said address notifying step, the PMTU relating to the data path between said mobile node before said handover by said mobile node and said correspondent node is notified together with the address of said correspondent node.
With the arrangement as described above, it is possible to carry out the discovering of the PMTU in the access router connected after handover (a second access router) with high efficiency, to reduce the processing load and to shorten the time required for PMTU in the second access router, and to improve efficiency in the notification of a new PMTU to the mobile node.

Further, the present invention provides the communication handover method as described above, wherein said method comprises a step of generating RtSolPr message or FBU message where the address of said correspondent node is embedded or of generating RtSolPr message or FBU message of FMIP where the address of said correspondent node and the PMTU relating to the data path between said mobile node before said handover by said mobile node and said correspondent node are embedded; and
in said address notifying step, said RtSolPr message or said FBU message is transmitted to said first access router.
With the arrangement as described above, it is possible to give the address of the correspondent node (CN) and the information about PMTU, which the mobile node has been using before the handover, to each message of FMIP, and to efficiently transmit to the access router connected before the handover (a first access router).

Also, the present invention provides the communication handover method as described above, wherein, in said PMTU receiving step, an RA message with a PMTU relating to a data path from second access router to said correspondent node decided by said second access router embedded therein is received.
With the arrangement as described above, it is possible to acquire the PMTU relating to the data path up to the correspondent node (CN) by receiving RA message, which had included the MTU of local link in the past.

Further, the present invention provide a communication message processing method in a first access router in a communication system where the first access router having a first access point under control and a second access router having a second access point under control are connected via a communication network, and a mobile node performs handover from said first access point to said second access point, wherein said method comprises:
an address receiving step where an identification information of said second access point and an address of the correspondent node, with which said mobile node has been communicating via said first access point before said handover are received from said mobile node;
a connection destination identifying step where said second access router is identified according to the identification information of said second access point; and
an address notifying step where the address of said correspondent node is notified to said second access router identified in said connection destination identifying step.
With the arrangement as described above, it is possible to quickly decide a PMTU relating to a new data path after the handover even when the mobile node has performed handover, and an access router, with which the mobile node has been connected before the handover (a first access router) can transmit necessary information to an access router, with which the mobile node is connected after the handover (a second access router).

Also, the present invention provides the communication message processing method as described above, wherein, in said address receiving step, the PMTU relating to the data path between said mobile node before the handover by said mobile node and said correspondent node is received from said mobile node together with the address of said correspondent node.
With the arrangement as described above, it is possible to efficiently discover a PMTU at an access router, to which the mobile node is connected after the handover (a second access router), to reduce the processing load and to shorten the time required for PMTU, and to improve efficiency in the notification of a new PMTU to the mobile node.

Further, the present invention provides the communication message processing method as described above, wherein, in said address receiving step, a RtSolPr message of FMIP or a FBU message with the address of said correspondent node embedded therein is received, or the RtSolPr message of FMIP or the FBU message where the address of said correspondent node and the PMTU relating to the data path between said mobile node before said handover by said mobile note and said correspondent node are received.
With the arrangement as described above, it is possible to efficiently transmit the address of the correspondent node (CN) and the information of the PMTU, which the mobile node has been using before the handover, by embedding them in each of the messages of FMIP to the access router, with which the mobile node has been communicating before the handover.

Also, the present invention provides the communication message processing method as described above, wherein said method further comprises a step for generating an HI message of FMIP where the address of said correspondent node is embedded, or for generating an HI message of FMIP where the address of said correspondent node and the PMTU relating to the data path between said mobile node before said handover by said mobile node and said correspondent node are embedded; and
said HI message is transmitted to said second access router in said address notifying step.
With the arrangement as described above, an access router, with which the mobile node has been connected before the handover (a first access router), can efficiently transmit the address of the correspondent node (CN) or the information of the PMTU used by the mobile node before the handover to an access router, with which the mobile node is connected after the handover, to an access router, with which the mobile node is connected after the handover (a second access router) by embedding them in each of the messages of FMIP.

Further, the present invention provides the communication message processing method in a second access router in a communication system where a first access router having a first access point under control and a second access router having a second access point under control are connected via a communication network and a mobile node performs handover from said first access point to said second access point, wherein said method comprises:
an address receiving step where the address of the correspondent node, with which said mobile node being scheduled to perform said handover is communicating via said first access point before said handover, is received from said first access router;
a PMTU deciding step for deciding the PMTU relating to the data path to said correspondent node according to the address of said correspondent node received in said address receiving step; and
a PMTU notifying step for notifying said PMTU via said second access point to said mobile node connected to said second access point by said handover.
With the arrangement as described above, an access router, with which the mobile node has been communicating before the handover (a first access router) can transmit necessary information to an access router, with which the mobile node is connected after the handover (a second access router) so that the PMTU relating to the new data path after the handover can be quickly decided even in case the mobile node has performed the handover.

Also, the present invention provides the communication message processing method as described above, wherein, in said address receiving step, when the PMTU relating to data path between said mobile node before said handover by said mobile node and said correspondent node is received together with the address of said correspondent node, the PMTU relating to the data path to said correspondent node is decided by using the PMTU relating to the data path between said mobile node before said handover by said mobile node and said correspondent node in said PMTU deciding step.
With the arrangement as described above, the mobile node can efficiently discover the PMTU at an access router, with which the mobile node is connected after the handover. As a result, it is possible to reduce the processing load and to shorten the time required for PMTU, and to improve the efficiency of the notification of a new PMTU to the mobile node.

Further, the present invention provides the communication message processing method as described above, wherein, in said address receiving step, the HI message of FMIP where the address of said correspondent node is embedded is received from said first access router, or the HI message of FMIP where the address of said correspondent node and the PMTU relating to the data path between said mobile node before said handover by said mobile node and said correspondent node are embedded is received.
With the arrangement as described above, an access router, with which the mobile node has been connected before the handover (a first access router), can efficiently transmit the address of the correspondent node (CN) or the information of the PMTU used by the mobile node before the handover to an access router, with which the mobile node is connected after the handover (a second access router) by embedding them in each of the messages of FMIP.

Also, the present invention provides the communication message processing method as described above, wherein said method further comprises:
a connection notification receiving step where the FNA message of FMIP to notify that said handover from said first access point to said second access point has been performed is received from said mobile node; and
a PMTU notifying message generating step for generating RA message where said PMTU decided in said PMTU deciding step is embedded; and
when said FNA message is received in said connection notification receiving step, said RA message generated in said PMTU notifying message generating step is transmitted to said mobile node.
With the arrangement as described above, the access router, with which the mobile node is connected after the handover (a second access router) can detect the connection of the mobile node by receiving FNA message and can transmit the PMTU relating to the data path up to the correspondent node (CN) by embedding them in RA message, which had included MTU of local link in the past.

The communication handover method and the communication message processing method according to the present invention have the arrangement as described above. The present invention provides such effects that the PMTU relating to the new data path after the handover can be quickly decided even when the mobile has performed the handover.

### BRIEF DESCRIPTION OF THE DRAWINGS

Fig. 1 is a drawing to show an example of network arrangement common to a first to a third embodiments of the present invention and to the prior art;
Fig. 2 is a block diagram to show an example of arrangement of MN in the first embodiment of the present invention;
Fig. 3 is a block diagram to show an example of arrangement of pAR in the first embodiment of the present invention;
Fig. 4 is a block diagram to show an example of arrangement of nAR in the first embodiment of the present invention;
Fig. 5 is a sequence chart to show an example of a method to decide PMTU when MN performs handover in the first embodiment of the present invention;
Fig. 6A is a drawing to show an FBU message where IP address of CN from MN to pAR is embedded as to be used in the first embodiment of the invention;
Fig. 6B is a drawing to show an RtSolPr message where IP address of CN from MN to pAR is embedded as to be used in the first embodiment of the invention;
Fig. 6C is a drawing to show a CN address notifying message where IP address of CN from MN to pAR is embedded as to be used in the first embodiment of the invention;
Fig. 7A is a drawing to show HI message where IP address of CN from pAR to nAR is embedded as to be used in the first embodiment of the present invention;
Fig. 7B is a drawing to show a CN address notifying message where IP address from pAR to nAR is embedded as to be used in the first embodiment of the present invention;
Fig. 8 is a block diagram to show an example of arrangement of pAR in a second embodiment of the invention;
Fig. 9 is a table to show list information where a matching relation between IP address of each of a plurality of CNs to be notified to nAR in a third embodiment of the invention and PMTU as set up in data path to each CN before handover are described; and
Fig. 10 is a sequence chart to show an example of method in the prior art to decide PMTU when source node performs handover.

### BEST MODE FOR CARRYING OUT THE INVENTION

Description will be given below on a first to a third embodiments of the present invention referring to the attached drawings. Basic features of the present invention are that, before handover, a mobile node (MN) for performing the handover notifies an IP address of a correspondent node (CN), with which MN has been communicating before the handover to an access router newly connected after the handover, and the access router newly connected after the handover discovers and decides an optimal PMTU relating to a path from the access router to CN as proxy so that MN acquires the optimal PMTU relating to a path from the newly connected access router to CN immediately after the handover, and that communication session in progress with CN can be quickly and continuously started by using optical packet size.

Fig. 1 is a drawing to show an example of a network arrangement common to a first to a third embodiments of the present invention and to the prior art. In Fig. 1, MN 10, pAR 20, AP 21 under control of pAR 20, nAR 30, AP 31 under control of nAR 30, CN 40, and an IP network 50 are shown. In Fig. 1, only one CN 40 is shown while MN 10 can communicate with a plurality of CN 40 via the IP network 50. This means that a plurality of CN 40 may be present.

In the above, pAR 20 and nAR 30 are access routers connected to the IP network 50 and forms a subnet respectively. When MN 10 is present within communication cell of AP 21 under control of pAR 20, MN 10 can gain access to the IP network 50 via AP 21 and pAR 20. In case it is present within communication cell of AP 31 under control of nAR 30, it can gain access to the IP network 50 via AP 31 and nAR 30. Also, CN 40 is a communication node connectable to the IP network 50 and can communicate with MN 10 connected with AP 21 or AP 31.

On the other hand, the IP network 50 is a WAN (Wide Area Network) utilizing IP communication such as Internet. In Fig. 1, five intermediate nodes 51 - 55 are shown as network elements of the IP network 50. Also, it is supposed that the intermediate node 51 has link with pAR 20 and with the intermediate node 52, that the intermediate node 52 has link with the intermediate node 51 and the intermediate node 55, that intermediate node 53 has link with nAR 30 and the intermediate node 54, that the intermediate node 54 has link with the intermediate node 53 and the intermediate node 55, and that the intermediate node 55 has link with the intermediate node 52, the intermediate node 54 and CN 40 respectively.

MN 10 is connected to AP 21 in the initial state and is communicating with CN 40 via a data path A. By performing handover from AP 21 to AP 31, it newly performs communication with CN 40 via a data path B after the handover. The data path A is a path, which connects the links of MN 10 - AP 21 - pAR 20 - the intermediate node 51 - the intermediate node 52 - the intermediate node 55 - CN 40. The data path B is a path, which connects the links of MN 10 - AP 31 - nAR 30 - the intermediate node 53 - the intermediate node 54 - the intermediate node 55 - CN 40.

### [1st Embodiment]

Next, description will be given on a first embodiment of the invention. In the first embodiment, description will be given on a method to use a technique described in the Non-Patent Document 2 (normally called FMIP (Fast Mobile IP)) for the purpose of notifying an IP address of CN 40, with which MN 10 is communicating, from MN 10 to nAR 30.

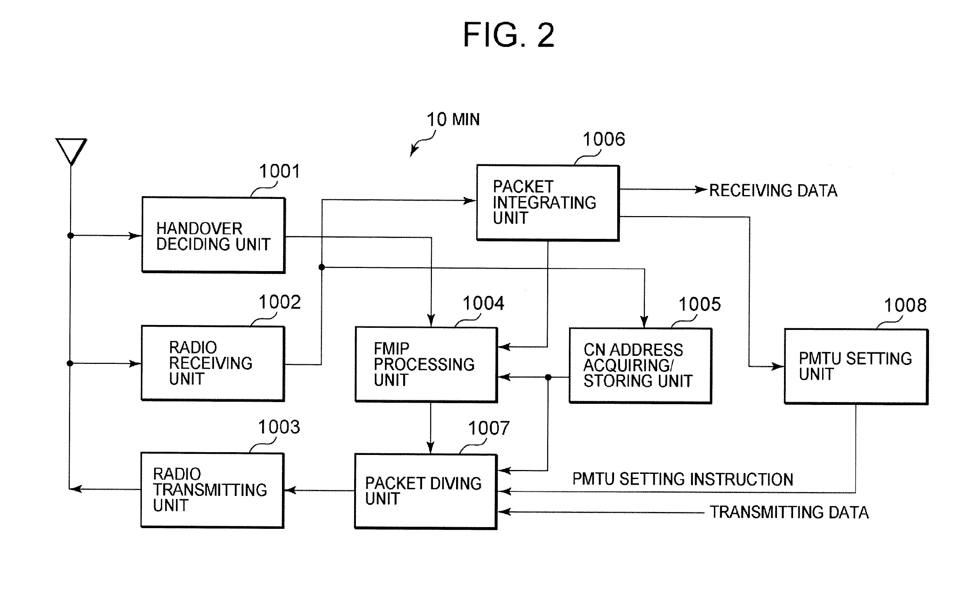

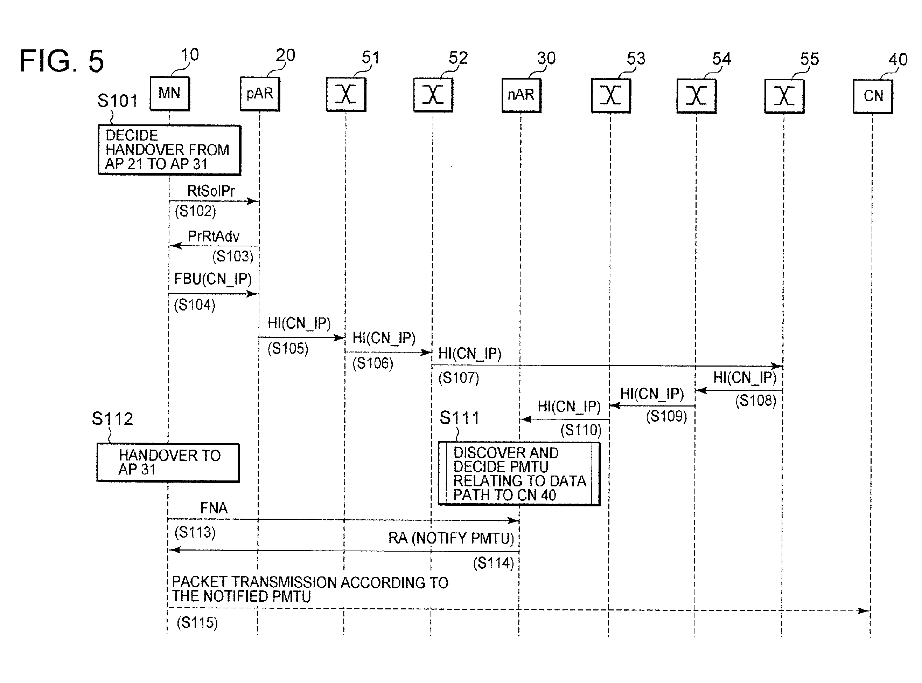

Now, description will be given on the arrangement of each of MN 10, pAR 20 and nAR 30 in the first embodiment. MN 10, pAR 20 and nAR 30 as shown in Fig. 2 to Fig. 4 each represents detailed arrangement of MN 10, pAR 20, and nAR 30 shown in Fig. 1. Although functions are shown in blocks in Fig. 2 to Fig. 4, these functions can be achieved by hardware and/or software. In particular, main processing (e.g. processing of the steps shown in Fig. 5 as given later) can be executed according to computer program.

Fig. 2 is a block diagram to show an example of arrangement of MN in the first embodiment of the present invention. MN 10 as shown in Fig. 2 comprises a handover deciding unit 1001, a radio receiving unit 1002, a radio transmitting unit 1003, an FMIP processing unit 1004, a CN address acquiring/storing unit 1005, a packet integrating unit 1006, a packet dividing unit 1007, and a PMTU setting unit 1008.

The handover deciding unit 1001 is a processing unit to decide the initiation of handover based on the conditions as desired such as L2 handover to AP with the highest electric wave intensity (switchover of the connection of AP at communication destination) by comparing electric wave intensities from a plurality of different APs, for instance.

Also, the radio receiving unit 1002 and the radio transmitting unit 1003 are the processing units for performing data receiving and data transmission by radio communication respectively, and these are provided with various functions necessary for radio communication.

The FMIP processing unit 1004 is a processing unit for performing the processing relating to FMIP such as transmission message relating to FMIP (e.g. generation of RtSolPr (Router Solicitation for Proxy or Router Solicitation for Proxy Advertisement) message or FBU (Fast Binding Update) message or receiving message (e.g. PrRtAdv (Proxy Router Advertisement) message or FBAck (Fast Binding Acknowledge) message) upon receipt of the decision of the initiation of handover by the handover deciding unit 1001. The presence of this FMIP processing unit 1004 indicates that MN 10 is provided with FMIP.

The CN address acquiring/storing unit 1005 is a processing unit for acquiring an IP address of CN 40, with which MN 10 is currently communicating, by referring to a header of the packet received at the radio receiving unit 1002 and for storing this IP address. The IP address of CN 40 stored by the CN address acquiring/storing unit 10 is supplied to the FMIP processing unit 1004 and is transmitted to pAR 20 together with the transmission message relating to FMIP or it is transmitted to pAR 20 as a specific CN address notifying message according to the transmission timing of the transmission message relating to FMIP or to the receiving timing of the receiving message. As described above, there may be a plurality of CN 40. In this case, IP address of each of a plurality of CN 40 is acquired and stored by the CN address acquiring/storing unit 1005.

The packet integrating unit 1006 is a processing unit for integrating the packet received at the radio receiving unit 1002 and for outputting it as a receiving data to an upper layer. In case the receiving data is a message relating to FMIP, the receiving data is processed at the FMIP processing unit 1004. If the receiving data is an information including PMTU to be set up, the receiving data is processed at the PMTU setting unit 1008.

The packet dividing unit 1007 is a processing unit for dividing various types of messages and transmission data to be transmitted from the radio transmitting unit 1003 to the packet of a predetermined packet size. The PMTU setting unit 1008 is a processing unit for extracting a notification information relating to PMTU from the receiving data and for giving instruction (PMTU setting instruction) for packet dividing at the packet dividing unit 1007 based on the extracted PMTU. It is preferable that the packet dividing unit 1007 turns the value of the PMTU designated by the PMTU setting instruction from the PMTU setting unit 1008 to packet size or makes the value smaller than the value of the PMTU designated by the PMTU setting instruction as packet size.

As described above, MN 10 is so arranged that it identifies the IP address of CN 40 currently in communication and transmits it to pAR 20 by embedding the IP address of CN 40 in the transmission message relating to FMIP or transmits a CN address notifying message including the IP address of CN 40 in accordance with the transmission timing of the transmission message relating to FMIP and with the receiving timing of the receiving message.

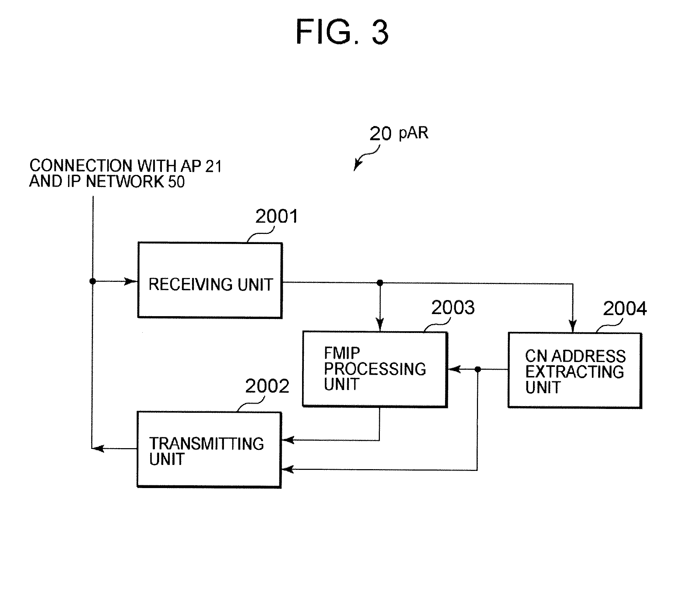

Fig. 3 is a block diagram to show an example of arrangement of pAR in the first embodiment of the present invention. As shown in Fig. 3, pAR 20 comprises a receiving unit 2001, a transmitting unit 2002, an FMIP processing unit 2003, and a CN address extracting unit 2004. Although pAR 20 has a transfer unit for transferring the received packet, it is not shown in the figure. The receiving unit 2001 and the transmitting unit 2002 are the processing units connected to AP 21 under control of pAR 20 or to the IP network 50 and are the processing units for performing data receiving and data transmission.

The FMIP processing unit 2003 is a processing unit for performing the processing relating to FMIP, e.g. discovering of an access router (nAR 30) of connection destination to be connected in the next handover by MN 10; acquisition of a network prefix of a subnet formed by nAR 30; generation of transmission message relating to FMIP (e.g. HI (Handover Initiate) message or FBack message; or processing of the receiving message relating to FMIP (e.g. FBU message or HAck (Handover Acknowledge) message. The presence of this FMIP processing unit 2003 indicates that pAR 20 is provided with FMIP.

The CN address extracting unit 2004 is a processing unit for carrying out the extraction of the IP address of CN 40 embedded in the receiving message relating to the FMIP received from MN 10 or the extraction of the IP address of CN 40 from a specific CN address notifying message received from MN 10. The IP address of CN 40 extracted by the CN address extracting unit 2004 is supplied to the FMIP processing unit 2003 and is transmitted to nAR 30 together with the transmission message relating to FMIP or transmitted to nAR 30 as a specific CN address notifying message in accordance with the transmission timing of the transmission message relating to FMIP or with the receiving timing of the receiving message.

As described above, pAR 20 is so arranged that, when MN 10 receives notification of the IP address of CN 40 currently in communication, the IP address of CN 40 is embedded in the transmission message relating to FMIP and is transmitted to nAR 30, or a CN address notifying message including the IP address of CN 40 is transmitted to nAR 30 in accordance with the transmission timing of the transmission message relating to FMIP or with the receiving timing of the receiving message.

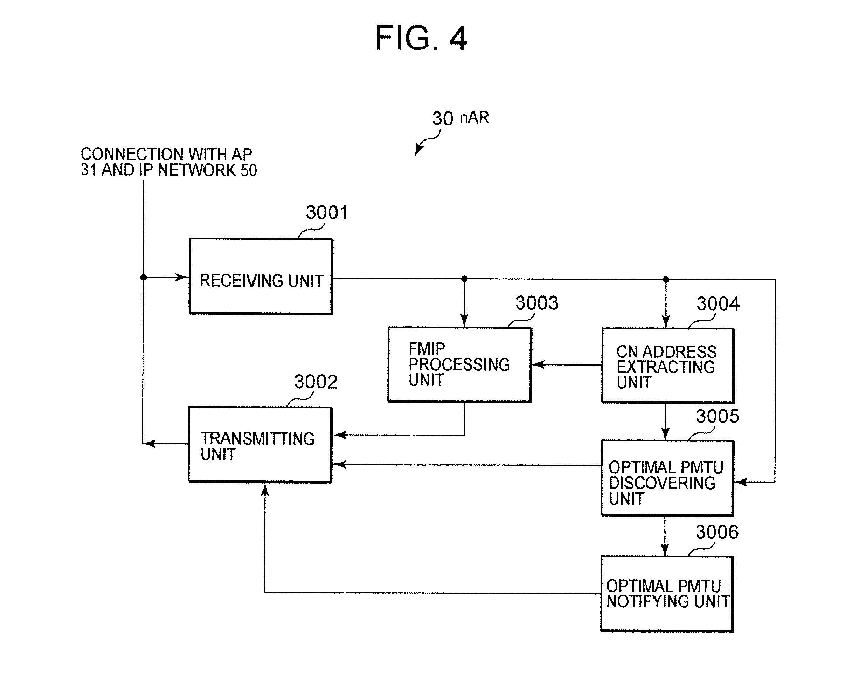

Fig. 4 is a block diagram to show an example of arrangement of nAR in the first embodiment of the present invention. As shown in Fig. 4, nAR 30 comprises a receiving unit 3001, a transmitting unit 3002, an FMIP processing unit 3003, a CN address extracting unit 3004, an optimal PMTU discovering unit 3005, and an optimal PMTU notifying unit 3006. Although nAR 30 has a transfer unit or the like for transferring the received packet, it is not shown in the figure. The receiving unit 3001 and the transmitting unit 3002 are connected to AP 31 under control of nAR 30 or to the IP network 50, and these units are the processing units for carrying out data receiving and data transmission.

The FMIP processing unit 3003 is a processing unit for carrying out the processing relating to FMIP such as the verification of validity of an IP address of MN 10 received from pAR 20, the generation of transmission message relating to FMIP (e.g. Hack message), and the processing of the receiving message relating to FMIP (e.g. HI message or FNA (Fast Neighbor Advertisement) message). The presence of the FMIP processing unit 3003 indicates that nAR 30 is provided with FMIP.

The CN address extracting unit 3004 is a processing unit for carrying out the extraction of the IP address of CN 40 embedded in the receiving message relating to the FMIP received from pAR 20, and the extraction of IP address of CN 40 from a specific CN address notifying message received from pAR 20. It is so arranged that the IP address of CN 40 extracted by the CN address extracting unit 3004 is supplied to the optimal PMTU discovering unit 3005.

The optimal PMTU discovering unit 3005 is a processing unit for discovering and deciding the FMTU relating to a data path to the IP address of CN 40 extracted by the CN address extracting unit 3004. In the method for deciding PMTU by the optimal PMTU discovering unit 3005, any technique can be used. Specifically, it is also possible to use the method for deciding PMTU as shown in Fig. 10, and also to use the technique disclosed in the Patent Documents 1 to 3.

The optimal PMTU notifying unit 3006 is a processing unit for notifying the PMTU decided by the optimal PMTU discovering unit 3005 to MN 10 connected to the subnet formed by nAR 30 after the handover. In the method for notifying PMTU by the optimal PMTU notifying unit 3006, it is also possible to use any method as desired. For instance, it is possible to include PMTU in an unsolicited unicase RA (Router Advertisement). Normally, MTU of local link is included in the RA message. Here, it may be so arranged that the PMTU is included in the RA message.

As described above, nAR 30 is so arranged that, when MN receives a notification of the IP address of CN 40 currently in communication from pAR 20, nAR 30 fulfills a function as proxy and carries out discovering and decision of the PMTU relating to the data path from nAR 30 to CN 40, and the decided PMTU is notified to MN 10 when MN 10 carries out the handover under control of nAR 30.

Next, description will be given on operation of the first embodiment of the present invention. Here, referring to Fig. 5, description will be given on operation in the network arrangement shown in Fig. 1 when MN 10, pAR 20 and nAR 30 are used as component elements as shown in Fig. 2 to Fig. 4. Fig. 5 is a sequence chart to show an example of a method for deciding PMTU when MN carries out the handover in the first embodiment of the present invention. In Fig. 5, AP 21 and AP 31 are not shown.

For instance, when MN 10 initiates moving from an area of pAR 20 (within the communication cell range of AP 21) to an area of nAR 30 (communication cell range of AP 31), the moving is detected by the layer 2. Using this as a starting point, the initiation of handover at the layer 3 is decided (Step S101). The initiation of the handover is decided through comparison of the received electric field intensity from AP 21 with the received electric field intensity from AP 31.

MN 10 acquires information including AP-ID (identification information of each AP) from AP 31 and transmits a RtSolPr message including AP-ID of AP 31 to pAR 20 currently connected (Step S102). Upon receipt of the RtSolPr message, pAR 20 discovers an access router present in the neighborhood according to AP-ID of AP 31 notified from MN 10 and acquires information of nAR 30 or acquires information of nAR 30 from the information already discovered (information retained at pAR 20).

Then, pAR 20 transmits a PrRtAdv message including information of nAR 30 (e.g. information of network prefix of a subnet made up by nAR 30) as a response of the RtSolPr message (Step S103). Upon receipt of the PrRtAdv message, MN 10 generates NCoA (New Care of Address) adaptable at the subnet formed by nAR 30 by using a network prefix of the subnet from by nAR 30 included in the PrRtAdv message and a link layer address of MN 10. The operation up to this point is the same as the operation defined by FMIP.

Here, MN 10 generates FBU message including NCoA. In this case, referring to the IP address of CN 40 currently in communication as identified by the CN address acquiring/storing unit 1005 (in particular, this is CN 40 carrying out communication at real time and having the session in progress), the information relating to the IP address of CN 40 is embedded in FBU message. In case there are a plurality of CN currently in communication, IP addresses of all of these CN 40 or a selected part of IP addresses of CN 40 may be embedded in the FBU message. It is also possible to embed the IP address of CN 40, for which packet is scheduled to be transmitted immediately after the handover even when it is not currently in communication. Then, MN 10 transmits the FBU message with the IP address of CN 40 embedded in it (in Fig. 5, it is marked as FBU(CN_IP)) to pAR 20 (Step S104).

Upon receipt of the FBU message with the IP address of CN 40 embedded in it, pAR 20 extracts the IP address of CN 40 within the FBU message by the CN address extracting unit 2004 and notifies the IP address of CN 40 thus extracted to the FMIP processing unit 2003. The FMIP processing unit 2003 embeds the IP address of CN 40 received from MN 10 into HI message when HI message is generated to confirm whether NCoA generated at MN 10 is an address usable in the subnet of nAR 30 or not. Then, pAR 20 transmits the HI message with the IP address of CN 40 embedded in it (in Fig. 5, it is marked as HI(CN_IP)) to nAR 30 (Step S105).

The HI message with the IP address of CN 40 embedded in it and transmitted from pAR 20 to nAR 30 reaches nAR 30 via the IP network 50. Here, in the arrangement of the network, HI message with the IP address of CN 40 embedded in it is transferred in the order of the intermediate node 51, the intermediate node 52, the intermediate node 55, the intermediate node 54 and the intermediate node 53, and reaches nAR 30 (Steps S106 to 110).

Upon receipt of the HI message with the IP address of CN 40 embedded in it, nAR 30 extracts the IP address of CN 40 in the HI message by the CN address extracting unit 3004 and notifies the IP address of CN 40 thus extracted to the optimal PMTU discovering unit 3005. Based on the IP address of one or a plurality of CN 40 transmitted from MN 10, the optimal PMTU discovering unit 3005 discovers and decides the optimal PMTU in the data path to each CN 40 (Step S111). As described above, in the method to decide PMTU by the optimal PMTU discovering unit 3005, it is possible to use any technique as desired. The PMTU decided by the optimal PMTU discovering unit 3005 is sent to the optimal PMTU notifying unit 3006.

Then, nAR 30 verifies whether NCoA included in the HI message with the IP address of CN 40 embedded in it is valid or not. If NCoA is valid, processing is performed, such as processing to transmit HAck message designating the status to show the result to pAR 20 (processing relating to normal FMIP) or transmissions of FBAck message by pAR 20 or transfer processing of packet from pAR 20 to nAR 30. Here, detailed description is not given.

On the other hand, when transmitting the FBU message with the IP address of CN 40 embedded in it, MN 10 performs handover processing from AP 21 under control of pAR 20 to AP 31 under control of nAR 30 (Step S112). Then, MN 10 transmits the FNA message to notify the connection to nAR 30 nAR 30 immediately after switchover of the connection to nAR 30 (Step S113).

Upon receipt of this FNA message, nAR 30 detects that MN 10 has been connected under control of nAR 30. The optimal PMTU notifying unit 3006 embeds the PMTU relating to the data path from nAR 30 to CN 40 into the RA message and transmits the RA message with the PMTU embedded in it (in Fig. 5, marked as RA (notification of PMTU)) to MN 10 (Step S114). MN 10 receives the RA message with the PMTU embedded in it. Then, by setting up the packet size of the packet to be transmitted to each CN 40 according to the information relating to the PMTU extracted from the RA message by the PMTU setting unit 1008, the packet to each CN 40 is transmitted (Step S115).

By the operation given above, it is possible to receive the notification of the PMTU relating to the data path from nAR 30 to one or a plurality of CN 40 as desired immediately after the handover (immediately after connection under control of nAR 30) and to transmit the packet to each CN 40 in the packet size as set up according to the PMTU. MN 10 may set up PMTU with each CN 40 by using the PMTU as received from nAR 30 or may set up a value smaller than PMTU as PMTU with each CN 40.

Also, there may be a case where the timing of the handover by MN 10 is too early, and when the FNA message is received from MN 10, nAR 30 may have not decided the PMTU relating to the data path to CN 40. Even in this case, if the PMTU is notified as soon as PMTU has been acquired by the optimal PMTU discovering unit 3005 of nAR 30, it is possible to quickly notify the PMTU relating to the data path to CN 40.

Also, in case nAR 30 discovers the PMTU relating to the data path to each of a plurality of CN 40, time lag may occur in deciding the PMTU relating to the data path up to each CN 40. In this case, nAR 30 may not notify MN 10 by embedding all of PMTUs into one message after deciding the PMTU relating to the data path to all of CN 40 or may notify to MN 10 by embedding the PMTUs sequentially according to the order of the decision into individual messages.

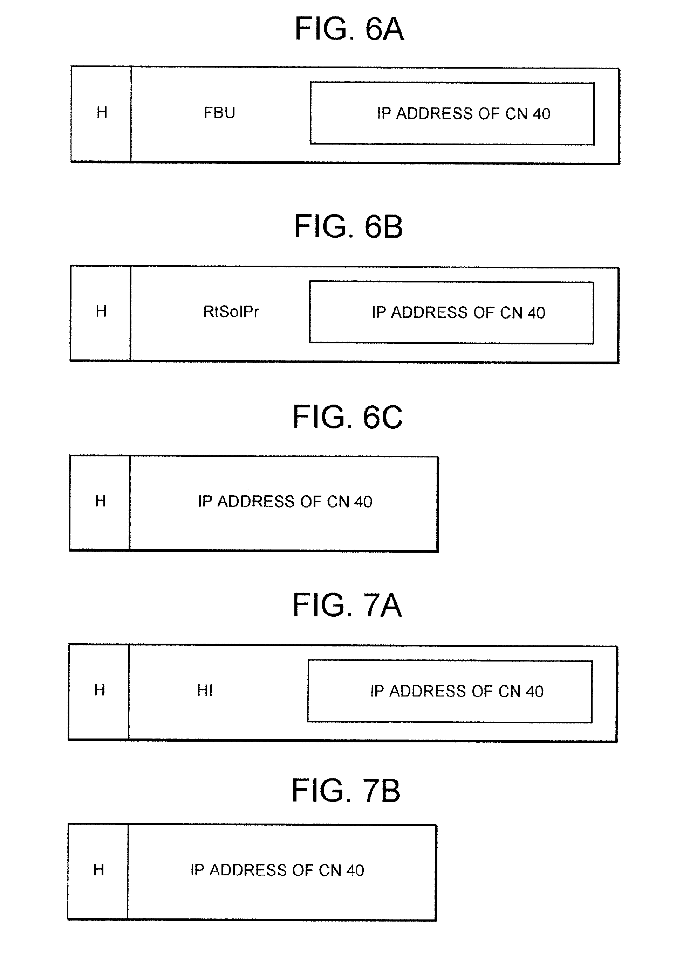

In the first embodiment as described above, description has been given on a case where MN 10 embeds the IP address of CN 40 into the FBU message, while it is also possible to embed it into the RtSolPr message or into an independent CN address notifying message not related to the message of FMIP. In particular, there may be the cases where the timing of the handover by MN 10 is too early and the FBU message may not be transmitted before the handover. In such case, it is effective to embed the IP address of CN 40 into the RtSolPr message. In Fig. 6A to 6C, three examples of the message relating to notification of the IP address of CN 40 from MN 10 to pAR 20 are shown. Similarly, it is possible to embed it into an independent CN address notifying message not relevant to the message relating to FMIP although the description has been given on the case where pAR 20 embeds the IP address of CN 40 into the HI message. In Fig. 7A and Fig. 7B, two examples of the message relating to notification of the IP address of CN 40 from pAR 20 to nAR 30 are shown. In the CN address notifying message to be transmitted from pAR 20 to nAR 30, it is necessary to include the information for differentiating MN 10.

As described above, according to the first embodiment of the present invention, the IP address of CN 40 is notified from MN 10 before the handover to nAR 30, and discovering and decision of the PMTU relating to the data path to CN 40 are carried out by nAR 30. As a result, after carrying out the handover under control of nAR 30, MN 10 can quickly acquire the PMTU relating to the data path from nAR to CN 40 and can quickly start the communication with CN 40 by using the packet size based on the PMTU.

### [2nd Embodiment]

Next, description will be given on a second embodiment of the present invention. In the first embodiment as given above, MN 10 notifies the IP address of CN 40. In contrast, in the second embodiment, the IP address of CN 40, which is in communication with MN 10, is identified by pAR 20.

In the second embodiment, compared with the first embodiment as given above, the arrangement of pAR 20 is slightly modified. In the arrangement as shown in Fig. 2, MN 10 can use an arrangement, in which the CN address acquiring/storing unit 1005 in charge of notifying the IP address of CN 40 from MN 10 to pAR 20 is deleted. In the same manner as in the first embodiment, nAR 30 can use the arrangement shown in Fig. 4.

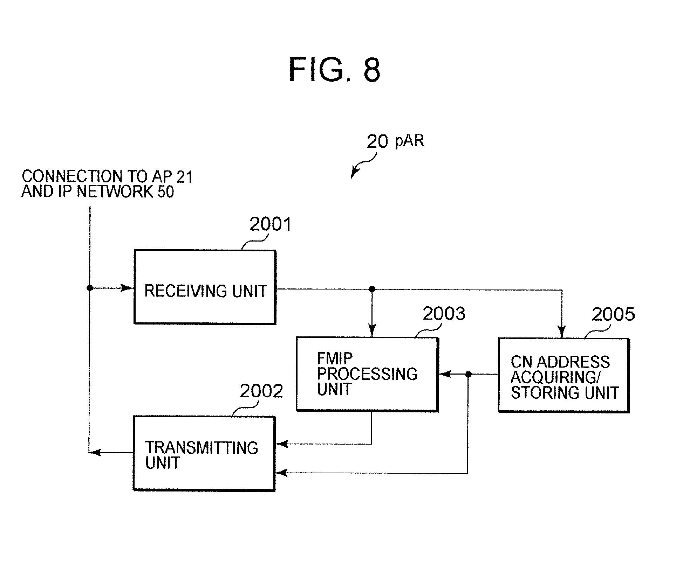

Fig. 8 is a block diagram to show an example of arrangement of pAR in the second embodiment of the present invention. In Fig. 8, pAR 20 comprises a receiving unit 2001, a transmitting unit 2002, an FMIP processing unit 2003, and a CN address acquiring/storing unit 2005. Although pAR 20 has a transfer unit for transferring the received packet, it is not shown in the figure. The receiving unit 2001, the transmitting unit 2002 and the FMIP processing unit 2003 are the same as explained in the first embodiment, and detailed description is not given here.

The CN address acquiring/storing unit 2005 is a processing unit for acquiring and storing the IP address of CN 40, which is in communication with MN 10 by supervising the header of the packet transmitted from MN 10. Specifically, by the CN address acquiring/storing unit 2005, pAR 20 can identify the IP address of CN 40, which is a correspondent node of MN 10. This also means that the CN address acquiring/storing unit 1005 mounted on MN 10 in the first embodiment is provided on pAR 20 as the CN address acquiring/storing unit 2005 in the second embodiment.

Next, description will be given on operation relating to the second embodiment of the invention. Here, in the network arrangement as shown in Fig. 1, description will be given on the case where MN 10 is under such arrangement that the CN address acquiring/storing unit 1005 is removed and pAR 20 shown in Fig. 8 and nAR 30 shown in Fig. 4 are used as component elements. In the following, referring to the sequence chart of Fig. 5, description will be given by pointing out only the modified processing in the operation in the second embodiment.

In the first embodiment as given above, the FBU message with the IP address of CN 40 embedded in it is transmitted from MN 10 to pAR 20 (processing of Step S104 in Fig. 5). Here, a conventional type FBU message (FBU message without the IP address of CN 40 embedded in it) is transmitted from MN 10 to pAR 20.

On the other hand, the CN address acquiring/storing unit 2005 always supervises the packet transmitted from MN 10 in connection and acquires and stores the IP address of CN 40, which is its correspondent node. When pAR 20 receives a message relating to FMIP (RtSolPr message or FBU message) from MN 10, it detects that MN 10 performs handover to nAR 30 and transmits an HI message with the IP address of CN 40 embedded in it, for instance.

The subsequent operation is the same as in the first embodiment. After carrying out the handover under control of nAR 30, MN 10 can quickly acquire the PMTU relating to the data path from nAR 30 to CN 40. The communication with CN 40 can be quickly started by using a packet size according to the PMTU.

In the second embodiment, too, either one of two patterns as shown in Fig. 7A and Fig. 7B may be used as the message relating to notification of the IP address of CN 40 from pAR 20 to nAR 30. Also, similarly to the first embodiment, it is possible to decide the PMTU on each of a plurality of CN 40. In the notification of PMTU from nAR 30 to MN 10, the PMTU relating to each of a plurality of CN 40 may be embedded in one message or the PMTU may be embedded in each individual message.

### [3rd Embodiment]

Next, description will be given on a third embodiment of the present invention. In the first and the second embodiments as given above, only the IP address of CN 40 is notified to nAR 30. In the third embodiment, the PMTU as set up in the communication with CN 40 is notified to nAR 30 together with the IP address of CN 40 under communication before the handover by MN 10.

In the third embodiment, compared with the first and the second embodiments as given above, it is so arranged that MN 10 and the CN address acquiring/storing units 1005 and 2005 can identify the PMTU as set up in the data path to CN 40 together with the IP address of CN 40. Also, it is so arranged that the optimal PMTU discovering unit 3005 of nAR 30 can acquire a set of information where the IP address of CN 40 is associated with the PMTU in the communication with CN 40 from pAR 20 and can discover and decide the PMTU relating to the data path to CN 40 according to a set of information.

Next, description will be given on operation relating to the third embodiment of the present invention. Here, in the network arrangement shown in Fig. 1, description will be given on operation in the case under the arrangement that MN 10, PAR 20 and nAR 30 can handle a set of information where the IP address of CN 40 is associated with the PMTU in the communication with CN 40.

Basic operation is approximately the same as that of the first and the second embodiments as given above. However, the PMTU in the communication with CN 40 is transmitted together with the IP address of CN 40. Therefore, in the sequence chart shown in Fig. 5, the FBU message (marked as FBU(CN_IP) with the IP address of CN 40 embedded in it should be read as the FBU message where the IP address of CN 40 and the PMTU are embedded (e.g. this can be marked as FBU(CN_IP + PMTU)), and the HI message where the IP address of CN 40 is embedded (marked as HI(CN_IP)) should be read as the HI message where the IP address of CN 40 and the PMTU are embedded (e.g. this can be marked as HI(CN_IP + PMTU)).

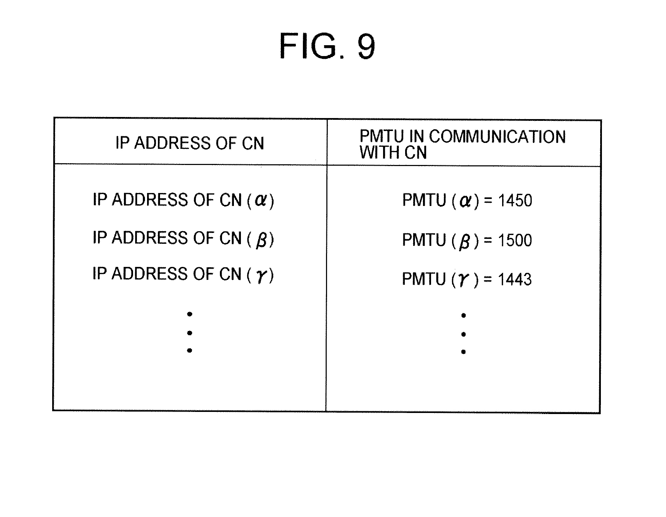

In case a plurality of CN 40 are present, it is desirable that there is a matching relation between the IP address of each of a plurality of CN 40 and the PMTU as set up in the data path to each CN 40 before the handover is notified to nAR 30 as the list information as shown in Fig. 9, for instance. In Fig. 9, to each of CN (α), CN (β), and CN (γ), the matching relation that the PMTU as set up before the handover is PMTU (α) = 1450, PMTU (β) = 1500, and PMTU (γ) = 1443 respectively, and this is given as a list information.

In this connection, nAR 30 can acquire a set of information where the IP address of CN 40 is associated with the PMTU under communication with CN 40. In this connection, there are the advantages relating to at least the following two points.

The first advantage is that, when MN 10 before the handover identifies the PMTU used in a data path A between MN 10 and CN 40 and if the PMTU between nAR 30 and CN 40 is discovered and decided by using this PMTU, it is possible to discover and discover the PMTU at nAR 30 quickly and efficiently. For instance, when nAR 30 discovers the PMTU by the method to decide the PMTU as shown in Fig. 10, as an information to be a reference or a guide for packet size of the packet to be transmitted to CN 40 at first, it is possible to use the PMTU, which MN 10 has been using before the handover in the data path A between MN 10 and CN 40. Also, when nAR 30 has identified the PMTU, which is optimal between itself and CN 40, it will suffice that nAR 30 simply compares these values. In particular, this method seems to be useful because it is anticipated that the data path A from MN 10 before the handover to CN 40 and the data path B from MN 10 after the handover to CN 40 may be overlapped on each other, and that PMTU relating to the data path A before the handover and the PMTU relating to the data path B after the handover may have the same value.

The second advantage is that, in Step S114 shown in Fig. 5, the data capacity when notifying the PMTU of each CN 40 to MN 10 connected under control of nAR 30 can be reduced. For instance, it is supposed here that nAR 30 discovers CN 40 with no need to change the PMTU before and after the handover as the result of discovering of the PMTU. To CN 40 in this case, it is possible not to notify the PMTU or to simply notify an OK message. On the other hand, it would be possible to reduce data capacity or number of notifications (number of transmissions of the notifying message) by arranging such a rule between MN 10 and nAR 30 in advance that PMTU is notified only to CN 40, for which PMTU must be changed. In particular, this would be useful in the case where the overlapping of the data path A and the data path B before and after the handover is in excess and the PMTU has the same value before and after the handover or in the case where there are a multiple of CN 40, with which MN 10 is performing communication.

Each of the functional blocks used in the description on the embodiments as given above can be typically achieved by LSI (Large Scale Integration). These may be designed as a single chip individually or may be designed as a single chip including a part or all. Here, it is referred as LSI, while it may be IC (Integrated Circuit), system LSI, super-LSI, or ultra-LSI due to the difference in the degree of integration.

The integrated circuit used in the method is not limited to LSI, and a special-purpose circuit or a general-purpose processor may be used. A FPGA (Field Programmable Gate Array) may be used, which can be programmed after the manufacture of LSI, or a reconfigurable processor may be used, in which connection or setting of circuit cell inside LSI can be reconfigured.

Further, with the progress of semiconductor technique or with the emergence of different associated techniques, if a new technique of circuit integration to replace LSI may appear in future, the functional blocks may be integrated by such techniques. For instance, there would be such possibility in the adaptation of biotechnology.

### INDUSTRIAL APPLICABILITY

The communication handover method and the communication message processing method according to the present invention provide such effects that the PMTU relating to new data path after the handover can be quickly decided even after the handover by the mobile node. These methods can be applied to the technique related to the handover by a mobile node, which performs radio communication. In particular, these can be applied to the technique relating to the mobile node, which performs radio communication using mobile IPv6.

## Claims

1. A communication handover method in a communication system where a first access router having a first access point under control and a second access router having a second access point under control are connected via a communication network, and a mobile node performs handover from said first access point to said second access point, wherein said method comprises:
a handover deciding step where said mobile node connected to said first access point decides to carry out said handover from said first access point to said second access point and acquires an identification information of said second access point from said second access point;
a first address notifying step where said mobile node notifies the identification information of said second access point to said first access router via said first access point, and said mobile node notifies an address of a correspondent node, with which the mobile node has been communicating via said first access point before the handover;
a second address notifying step where said first access router identifies said second access router according to the identification information of said second access point notified from said mobile node and notifies the address of said correspondent node to said second access router;
a PMTU deciding step where said second access router decides a PMTU relating to a data path to said correspondent node according to the address of said correspondent node;
a PMTU notifying step where said second access router notifies said PMTU via said second access point to said mobile node connected to said second access point by said handover; and
a packet size setting step where said mobile node sets up packet size of a packet to be transmitted to said correspondent node according to said PMTU notified from said second access router.

2. The communication handover method according to claim 1, wherein the PMTU relating to the data path between said mobile node before the handover by the mobile node and said correspondent node is notified together with the address of said correspondent node in said first and said second address notifying steps, and the PMTU relating to the data path to said correspondent node is decided according to the address of said correspondent node and according to the PMTU relating to the data path between said mobile node before said handover by said mobile node and said correspondent node in said PMTU deciding step.

3. The communication handover method according to claim 1, wherein, in said first address notifying step, the address of said correspondent node is embedded in RtSolPr message of FMIP or FBU message and is transmitted from said mobile node to said first access router, or said address of said correspondent node and the PMTU relating to the data path between said mobile node before the handover by said mobile node and said correspondent node are embedded in the RtSolPr message of FMIP or in the FBU message and are transmitted.

4. The communication handover method according to claim 1, wherein, in said second address notifying step, an address of said correspondent node is embedded in HI message of FMIP and transmitted from said first access router to said second access router, or the address of said correspondent node and the PMTU relating to the data path between said mobile node before the handover by said mobile node and said correspondent node are embedded in the HI message of FMIP and are transmitted.

5. The communication handover method according to claim 1, wherein, in said PMTU notifying step, said PMTU is embedded in RA message and is transmitted to said mobile node from said second access router.

6. A communication handover method in a communication system where a first access router with a first access point under control and a second access router having a second access point under control are connected via a communication network, and a mobile node performs handover from said first access point to said second access point, wherein said method comprises: and
a handover deciding step where it is decided that said handover is performed from said first access point to said second access point under the condition being connected to said first access point, and that an identification information of said second access point is acquired from said second access point;
an address notifying step where the identification information of said second access point and an address of a correspondent node, with which said mobile node has been communicating via said first access point before the handover are notified to said first access router via said first access point;
a PMTU receiving step where a PMTU relating to a data path to said correspondent node decided by said second access router according to the address of said correspondent node acquired from said first access router is received from said second access router via said second access point; and
a packet size setting step where packet size of a packet to be transmitted to said correspondent node is set up according to said PMTU received from said second access router;

7. The communication handover method according to claim 6, wherein, in said address notifying step, the PMTU relating to the data path between said mobile node before said handover by said mobile node and said correspondent node is notified together with the address of said correspondent node.

8. The communication handover method according to claim 6, wherein said method comprises a step of generating RtSolPr message or FBU message where the address of said correspondent node is embedded or of generating RtSolPr message or FBU message of FMIP where the address of said correspondent node and the PMTU relating to the data path between said mobile node before said handover by said mobile node and said correspondent node are embedded; and
in said address notifying step, said RtSolPr message or said FBU message is transmitted to said first access router.

9. The communication handover method according to claim 6, wherein, in said PMTU receiving step, an RA message with a PMTU relating to a data path from second access router to said correspondent node decided by said second access router embedded therein is received.

10. A communication message processing method in a first access router in a communication system where the first access router having a first access point under control and a second access router having a second access point under control are connected via a communication network, and a mobile node performs handover from said first access point to said second access point, wherein said method comprises:
an address receiving step where an identification information of said second access point and an address of the correspondent node, with which said mobile node has been communicating via said first access point before said handover are received from said mobile node;
a connection destination identifying step where said second access router is identified according to the identification information of said second access point; and
an address notifying step where the address of said correspondent node is notified to said second access router identified in said connection destination identifying step.

11. The communication message processing method according to claim 10, wherein, in said address receiving step, the PMTU relating to the data path between said mobile node before the handover by said mobile node and said correspondent node is received from said mobile node together with the address of said correspondent node.

12. The communication message processing method according to claim 10, wherein, in said address receiving step, a RtSolPr message of FMIP or a FBU message with the address of said correspondent node embedded therein is received, or the RtSolPr message of FMIP or the FBU message where the address of said correspondent node and the PMTU relating to the data path between said mobile node before said handover by said mobile note and said correspondent node are received.

13. The communication message processing method according to claim 10, wherein said method further comprises a step for generating an HI message of FMIP where the address of said correspondent node is embedded, or for generating the HI message of FMIP where the address of said correspondent node and the PMTU relating to the data path between said mobile node before said handover by said mobile node and said correspondent node are embedded; and
said HI message is transmitted to said second access router in said address notifying step.

14. A communication message processing method in a second access router in a communication system where a first access router having a first access point under control and a second access router having a second access point under control are connected via a communication network, and a mobile node performs handover from said first access point to said second access point, wherein said method comprises:
an address receiving step where the address of the correspondent node, with which said mobile node being scheduled to perform said handover is communicating via said first access point before said handover, is received from said first access router;
a PMTU deciding step for deciding the PMTU relating to the data path to said correspondent node according to the address of said correspondent node received in said address receiving step; and
a PMTU notifying step for notifying said PMTU via said second access point to said mobile node connected to said second access point by said handover.

15. The communication message processing method according to claim 14, wherein, in said address receiving step, when the PMTU relating to data path between said mobile node before said handover by said mobile node and said correspondent node is received together with the address of said correspondent node, the PMTU relating to the data path to said correspondent node is decided by using the PMTU relating to the data path between said mobile node before said handover by said mobile node and said correspondent node in said PMTU deciding step.

16. The communication message processing method according to claim 14, wherein, in said address receiving step, the HI message of FMIP where the address of said correspondent node is embedded is received from said first access router, or the HI message of FMIP where the address of said correspondent node and the PMTU relating to the data path between said mobile node before said handover by said mobile node and said correspondent node are embedded is received.

17. The communication message processing method according to claim 14, wherein said method further comprises:
a connection notification receiving step where the FNA message of FMIP to notify that said handover from said first access point to said second access point has been performed is received from said mobile node; and
a PMTU notifying message generating step for generating RA message where said PMTU decided in said PMTU deciding step is embedded; and
when said FNA message is received in said connection notification receiving step, said RA message generated in said PMTU notifying message generating step is transmitted to said mobile node.
